# EUROPÄISCHE PATENTSCHRIFT

(11) **EP 2 757 324 B1**
(45) Veröffentlichungstag und Bekanntmachung des Hinweises auf die Patenterteilung: **06.05.2020**
(21) Anmeldenummer: 14150302.9
(22) Anmeldetag: 07.01.2014
(51) Int. Cl.: F24D 19/10, G01F 5/00

(54) **Verfahren zum Messen von Volumenströmen**
Method for measuring volumetric flows
Procédé de mesure de débits volumiques

(30) Priorität: 18.01.2013 DE 102013000774
(43) Veröffentlichungstag der Anmeldung: 23.07.2014
(73) Patentinhaber: Vaillant GmbH, 42859 Remscheid (DE)
(72) Erfinder: Wriske, Jochen, 42857 Remscheid (DE); Fischer, Christian, 42899 Remscheid (DE); Fahr, René, 50859 Köln (DE)
(74) Vertreter: Popp, Carsten

(56) Entgegenhaltungen:
- EP-A2- 1 191 287
- WO-A1-02/090832
- JP-A- 2001 317 748

## Beschreibung

Die Erfindung betrifft ein Verfahren zum Messen von Volumenströmen in Heizkreisen.

In zentralheizungsbasierten Wärmeversorgungssystemen wird die erzeugte Wärme mittels zirkulierendem Heizungswasser von der Wärmequelle oder den Wärmequellen zu den Wärmesenken wie Heizkörper, Fußbodenheizkreise etc. verteilt. Durch Stell- und Regeleinrichtungen in den einzelnen Räumen kann dabei der Volumenstrom des lokal zirkulierenden Heizungswassers dem momentanen Bedarf angepasst werden.

Aus der Patentanmeldung EP 1 191 287 A2 ist ein Leitungssystem zur thermischen Energieübertragung mit Bypassleitung bekannt, bei dem eine Betriebselektronik abhängig von Betriebsparametern die Förderhöhe einer drehzahlgeregelten Pumpe vorgibt.

Diese Anpassung an den Wärmebedarf hat bei modernen Installationen geringe Volumenströme in der Heizungsanlage zur Folge. Günstige Volumenstromsensoren sind durch das zu Grunde liegende Prinzip im Messbereich für kleine Volumenströme eingeschränkt. Dies gilt zum Beispiel für Sensoren, die auf dem Vortex-Prinzip basieren. Unterhalb einer bestimmten Grenze ist die Erfassung der Volumenströme heute nicht möglich. Alternativ stehen Sensoren mit einem breiten Messbereich zur Verfügung, die auch geringe Volumenströme erfassen können. Diese Sensoren sind jedoch sehr teuer.

Aufgabe dieser Erfindung ist es, ein Verfahren bereitzustellen, mit dem es möglich ist, geringe Volumenströme im Heizkreis auch mit kostengünstigen Sensoren erfassen zu können. Insbesondere ist es Aufgabe der Erfindung, einen Volumenstrom durch den Heizkreis zu messen, der unterhalb des Messbereichs des Sensors liegt.

Erfindungsgemäß wird, sobald die Unterschreitung des Messbereichs des verwendeten Sensors festgestellt wird, bei konstanter Pumpenförderhöhe ein Teil des Volumenstroms parallel zur Wärmesenke über eine Messstrecke geleitet. Die Pumpenförderhöhe kann z.B. mit dem in der Anmeldung DE 102012003502.0 beschriebenen Verfahren konstant gehalten werden. Dabei wird ein Vorrangumschaltventil (3-Wege-Ventil) in eine definierte Mischposition verfahren, um ein definiertes Volumenstrom-Mischungsverhältnis zwischen Messstrecke und Wärmesenke zu erreichen. Dabei wird der nun höhere Volumenstrom mit dem vorhandenen Sensor gemessen. Nachdem der Gesamt-Volumenstrom gemessen und der anteilige Volumenstrom durch die Wärmesenke ermittelt wurde, wird das Vorrangumschaltventil wieder so geschaltet, dass der Volumenstrom ausschließlich durch die Wärmesenke geleitet wird. Vor diesem Messvorgang wird der Volumenstrom einmalig ausschließlich durch die Messstrecke geleitet, um den Strömungswiderstand der Messstrecke zu ermitteln. Dies kann entweder vor jedem Messvorgang oder nur einmalig für alle Messvorgänge oder gelegentlich erfolgen.

Die Erfindung wird nun anhand der Figuren detailliert erläutert.

Es stellen dar:
Figur 1: Einen Heizkreis zum Durchführen des erfindungsgemäßen Verfahrens
Figur 2: Darstellung des Verlaufs des gemessenen Volumenstroms über der Stellung des Vorrangumschaltventils

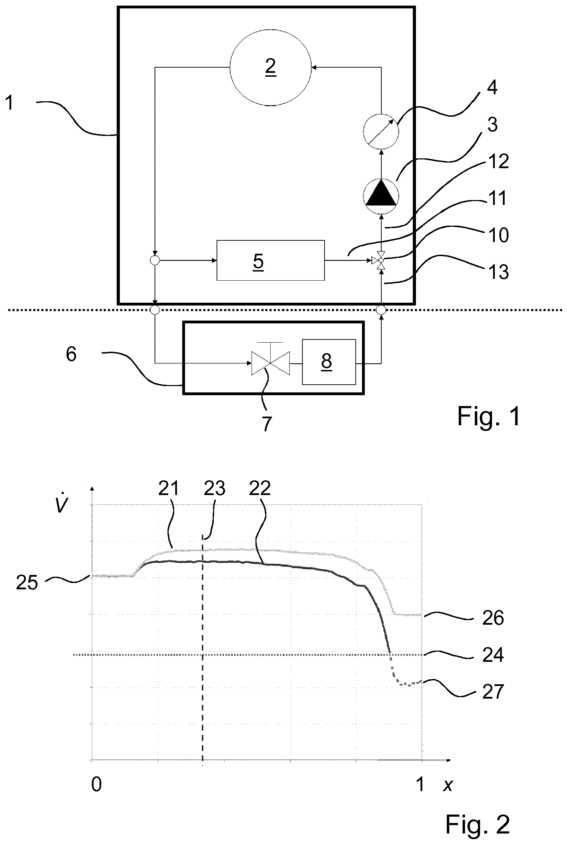

Figur 1 zeigt einen Heizkreis zur Durchführung des erfindungsgemäßen Verfahrens. Der Primärwärmetauscher 2 stellt die Wärmequelle dar und ist zusammen mit einer Pumpe 3, dem Volumenstromsensor 4, einer Messstrecke 5 und einem Vorrangumschaltventil 10 in einem Heizkessel 1 vorgesehen. Das Radiatorsystem stellt die Wärmesenke 6 dar und umfasst einen Wärmetauscher 8 zur Abgabe der Wärme sowie optional ein Ventil 8, z.B. ein Thermostatventil oder ein manuell betätigbares Ventil. Das Vorrangumschaltventil 10 kann so betrieben werden, dass zum Messen der Messstrecke ausschließlich der Zweig 11 mit 12 verbunden ist, während 13 abgesperrt ist, dass im normalen Heizbetrieb ausschließlich der Zweig 13 mit 12 verbunden ist, während 11 abgesperrt ist und dass zum Messen des Volumenstroms die Zweige 11 und 13 in einem definierten Mischungsverhältnis mit 12 verbunden sind. Die Messstrecke 5 kann ein einfaches Verbindungsrohr, einen sekundären Wärmetauscher oder ein Speicher sein.

Figur 2 zeigt den Verlauf des vom Volumenstromsensor 4 in Figur 1 gemessenen Volumenstroms *V̇* über der Stellung *x* des Vorrangumschaltventils 10 in Figur 1. Ein Wert von 1 für *x* bedeutet, dass der Volumenstrom ausschließlich vom Zweig 13 zum Zweig 12 fließt. Ein Wert von 0 für *x* bedeutet, dass der Volumenstrom ausschließlich vom Zweig 11 zum Zweig 12 fließt. Werte zwischen 0 und 1 stehen für das entsprechende Mischungsverhältnis.

Dargestellt ist ein erster Volumenstromverlauf 21 und ein zweiter Volumenstromverlauf 22 über dem Wert *x.* Für den Wert *x* = 0 ist der Kreislauf ausschließlich über die Messstrecke 5 geschlossen, da das Vorrangumschaltventil 10 ausschließlich die Zweige 11 und 12 miteinander verbindet. Für beide Volumenstromverläufe 21, 22 stellt sich ein Volumenstrom 25 durch die Messstrecke ein. Für den Wert *x* = 1 ist der Kreislauf ausschließlich über die Wärmesenke 6 geschlossen, da das Vorrangumschaltventil 10 ausschließlich die Zweige 13 und 12 miteinander verbindet. Für den ersten Volumenstromverlauf 21 stellt sich ein erster Volumenstrom durch die Wärmesenke 26 ein. Da dieser Volumenstrom oberhalb des Schwellenwerts 24 liegt, kann der Volumenstrom durch den Volumenstromsensor 4 gemessen werden.

Für den zweiten Volumenstromverlauf sei angenommen, dass das Ventil 7 in der Wärmesenke 6) stark angedrosselt ist. Dadurch stellt sich ein sehr geringer zweiter Volumenstrom durch die Wärmesenke 27 ein, der unterhalb des Schwellenwertes 24 liegt und nicht von dem Volumenstrom Sensor 4 erfasst werden kann, da er zu gering ist. In dem erfindungsgemäßen Verfahren wird das Vorrangumschaltventil 10 bei konstanter Pumpenförderhöhe in einer Stellung 23 betrieben, in dem ein Teilstrom durch die Messstrecke 5 und dem Zweig 11 und ein Teilstrom durch die Wärmesenke 6 und den Zweig 13 fließt. Dadurch fließt in Summe ein höherer Gesamtvolumenstrom durch den Zweig 12 und den Volumenstrom Sensor 4. Dies ist in dem Diagramm in Figur 2 der Schnittpunkt zwischen der senkrechten Linie 23 und dem zweiten Volumenstromverlauf 22. Durch Vergleich mit dem unmittelbar zuvor oder in einem bereits werksseitig, installationsseitig oder zu einem anderen früheren Zeitpunkt durchgeführten und gespeicherten Kalibriervorgang in der Ventilstellung *x* = *0* ermittelten Volumenstroms durch die Messstrecke 25 wird mittels Proportionalitätsfaktor oder Regression der resultierende Volumenstrom 27, der sich tatsächlich für den zweiten Volumenstromverlauf für die Ventilstellung *x* = *1* einstellt, bestimmt.

Der Volumenstrom *V̇* wird in Stellung 23 gemessen. Anschließend wird das Vorrangumschaltventil 10 so betätigt, dass ausschließlich der Zweig 13 mit dem Zweig 12 verbunden ist. Der gemessene Volumenstrom ist in der unteren Kurve unterhalb des Schwellenwerts 24 und muss daher erfindungsgemäß in einer Korrekturrechnung anhand des Messergebnisses, während ein definiertes Mischungsverhältnis zwischen den Zweigen 13 nach 12 und 11 nach 12 eingestellt war, ermittelt werden.

Das erfindungsgemäße Verfahren wird durchgeführt, sobald erkannt wird, dass der gemessene Wert des Volumenstromsensors 4 unterhalb des Schwellenwerts 24 liegt. Bevorzugt wird das erfindungsgemäße Verfahren periodisch wiederholt, solange der gemessene Wert des Volumenstromsensors 4 unterhalb des Schwellenwerts 24 liegt.

### Bezugszeichenliste

- 1: Heizkessel
- 2: Primärwärmetauscher
- 3: Pumpe
- 4: Volumenstromsensor
- 5: Messstrecke
- 6: Wärmesenke
- 7: Ventil
- 8: Wärmetauscher
- 10: Vorrangumschaltventil
- 11: Zweig
- 12: Zweig
- 13: Zweig
- 21: Erster Volumenstromverlauf
- 22: Zweiter Volumenstromverlauf
- 23: Definierte Vorrangumschaltventil-Stellung
- 24: Schwellenwert
- 25: Volumenstrom durch die Messstrecke
- 26: Erster Volumenstrom durch die Wärmesenke
- 27: Zweiter Volumenstrom durch die Wärmesenke

## Patentansprüche

1. Verfahren zum Messen geringer Volumenströme in einem Heizkreis mit einer Wärmequelle (2), einer Pumpe (3), einem Volumenstromsensor (4) und einer Wärmesenke (6), wobei parallel zur Wärmesenke (6) eine Messstrecke (5) vorgesehen ist und wobei Wärmesenke und Messstrecke mit einem Vorrangumschaltventil (10) mit dem Heizkreis verbindbar sind, **gekennzeichnet durch** die Schritte
a) Betreiben des Heizkreises in einem erweiterten Betrieb bei konstant gehaltener Pumpenförderhöhe, wobei im erweiterten Betrieb das Vorrangumschaltventil (10) in einer definierten Mischposition betrieben wird, in der Teilströme in einem definierten Verhältnis durch Messstrecke (5) und Wärmesenke (6) fließen
b) Messen des sich einstellende Volumenstroms mit dem Volumenstromsensor (4),
c) Bestimmen der Volumenstromüberhöhung auf Basis der Messung des Volumenstroms mit dem Volumenstromsensor (4) und eines zuvor im Rahmen einer Kalibrierung bestimmten Volumenstroms in einer Ventilstellung des Vorrangumschaltventils (10), in der der Volumenstrom ausschließlich durch die Messstrecke fließt (5),
d) Berechnen des resultierenden Volumenstroms im Heizkreis in einer Ventilstellung, in der der Volumenstrom ausschließlich durch die Wärmesenke (6) fließt, aus der in Schritt c) ermittelten Volumenströmüberhöhung über einen Proportionalitätsfaktor oder eine Regressionsrechnung,
e) Betreiben des Heizkreises im Normalbetrieb, wobei das Vorrangumschaltventil (10) in einer Stellung betrieben wird, in der der Volumenstrom ausschließlich durch die Wärmesenke (6) fließt.

2. Verfahren nach Anspruch 1, wobei die Verfahrensschritte a). bis d) einmalig beim Feststellen einer Unterschreitung des Messbereichs des Volumenstromsensors (10) durchgeführt werden.

3. Verfahren nach Anspruch 1, wobei Verfahrensschritte a) bis d) periodisch und in zeitlichen Abständen beim Feststellen einer Unterschreitung des Messbereichs des Volumenstromsensors (10) durchgeführt werden.

4. Verfahren nach einem der Ansprüche 1 bis 3, wobei der in Schritt c) im Rahmen einer Kalibrierung bestimmte Volumenstrom einmalig bestimmt und gespeichert wird.

5. Verfahren nach einem der Ansprüche 1 bis 3, wobei der in Schritt c) im Rahmen einer Kalibrierung bestimmte Volumenstrom wiederholt im Betrieb bestimmt wird.

6. Verfahren nach einem der Ansprüche 1 bis 5, wobei die Messtrecke (5) ein Wärmetauscher ist.

7. Verfahren nach einem der Ansprüche 1 bis 5, wobei die Messtrecke (5) ein Speicher ist.

## Claims

1. Method for measuring small volume flows in a heating circuit with a heat source (2), a pump (3), a volume flow sensor (4) and a heat sink (6), wherein a measuring section (5) is provided parallel to the heat sink (6), and wherein the heat sink and measuring section can be connected to the heating circuit with a priority switching valve (10), **characterised by** the steps
a) operation of the heating circuit in an expanded operation at a constantly held pump delivery head, wherein in the expanded operation the priority switching valve (10) is operated in a defined mixing position, in which partial flows flow in a defined ratio through measuring section (5) and heat sink (6),
b) measurement of the resulting volume flow with the volume flow sensor (4),
c) determination of the volume flow elevation on the basis of the measurement of the volume flow with the volume flow sensor (4) and of a volume flow previously determined as part of a calibration in a valve position of the priority switching valve (10) in which the volume flow flows exclusively through the measuring section (5).
d) calculation of the resulting volume flow in the heating circuit in a valve position, in which the volume flow flows exclusively through the heat sink (6), from the volume flow elevation determined in step c) via a proportionality factor or a regression analysis,
e) operation of the heating circuit in normal operation, wherein the priority switching valve (10) is operated in a position, in which the volume flow flows exclusively through the heat sink (6).

2. Method according to claim 1, wherein the method steps a) to d) are carried out once when an undershooting of the measurement range of the volume flow sensor (10) is detected.

3. Method according to claim 1, wherein method steps a) to d) are carried out periodically and at time intervals when an undershooting of the measurement range of the volume flow sensor (10) is detected.

4. Method according to any one of claims 1 to 3, wherein the volume flow determined in step c) as part of a calibration is determined once and stored.

5. Method according to any one of claims 1 to 3, wherein the volume flow determined in step c) as part of a calibration is determined repeatedly during operation.

6. Method according to any one of claims 1 to 5, wherein the measuring section (5) is a heat exchanger.

7. Method according to any one of claims 1 to 5, wherein the measuring section (5) is a memory.

## Revendications

1. Procédé de mesure de débits volumiques faibles dans un circuit de chauffage avec une source de chaleur (2), une pompe (3), un capteur de débit volumique (4) et un dissipateur thermique (6), dans lequel un chemin de mesure (5) est prévu parallèlement au dissipateur thermique (6) et dans lequel dissipateur thermique et chemin de mesure peuvent être reliés avec une soupape d'inversion de priorité (10) au circuit de chauffage, **caractérisé par** les étapes suivantes
a) actionnement du circuit de chauffage en fonctionnement avancé en cas de hauteur de refoulement de pompe maintenue constante, dans lequel, en fonctionnement avancé, la soupape d'inversion de priorité (10) est actionnée dans une position de mélange définie, dans laquelle des débits partiels s'écoulent dans une proportion définie à travers un chemin de mesure (5) et un dissipateur thermique (6)
b) mesure du débit volumique s'ajustant avec le capteur de débit volumique (4),
c) détermination de l'excès de débit volumique sur la base de la mesure du débit volumique avec le capteur de débit volumique (4) et d'un débit volumique déterminé préalablement dans le cadre d'un calibrage dans une position de soupape de la soupape d'inversion de priorité (10), dans laquelle le débit volumique s'écoule (5) uniquement à travers le chemin de mesure,
d) calcul du débit volumique résultant dans le circuit de chauffage dans une position de soupape dans laquelle le débit volumique s'écoule uniquement à travers le dissipateur thermique (6), à partir de l'excès de débit volumique déterminé lors de l'étape c), par un facteur de proportionnalité ou un calcul de régression,
e) actionnement du circuit de chauffage en fonctionnement normal, dans lequel la soupape d'inversion de priorité (10) est actionnée dans une position dans laquelle le débit volumique s'écoule uniquement à travers le dissipateur thermique (6).

2. Procédé selon la revendication 1, dans lequel les étapes de procédé a) à d) sont effectuées une seule fois en cas de constatation d'un dépassement vers le bas d'une plage de mesure du capteur de débit volumique (10).

3. Procédé selon la revendication 1, dans lequel les étapes de procédé a) à d) sont effectuées de manière périodique et à certains intervalles de temps en cas de constatation d'un dépassement vers le bas d'une plage de mesure du capteur de débit volumique (10).

4. Procédé selon l'une quelconque des revendications 1 à 3, dans lequel le débit volumique déterminé lors de l'étape c) dans le cadre d'un calibrage est déterminé et enregistré une seule fois.

5. Procédé selon l'une quelconque des revendications 1 à 3, dans lequel le débit volumique déterminé lors de l'étape c) dans le cadre d'un calibrage est déterminé et enregistré de manière répétée en fonctionnement.

6. Procédé selon l'une quelconque des revendications 1 à 5, dans lequel le chemin de mesure (5) est un échangeur de chaleur.

7. Procédé selon l'une quelconque des revendications 1 à 5, dans lequel le chemin de mesure (5) est un réservoir.
